# EUROPÄISCHE PATENTSCHRIFT

(11) **EP 1 636 448 B1**
(45) Veröffentlichungstag und Bekanntmachung des Hinweises auf die Patenterteilung: **17.02.2010**
(21) Anmeldenummer: 04721855.7
(22) Anmeldetag: 19.03.2004
(51) Int. Cl.: E04H 12/08, F03D 11/04

(54) **VERFAHREN ZUR HERSTELLUNG EINES VERBINDUNGSFLANSCHES**
METHOD FOR THE PRODUCTION OF A CONNECTION FLANGE
PROCEDE POUR FABRIQUER UNE BRIDE D'ASSEMBLAGE

(30) Priorität: 02.06.2003 DE 10325032
(43) Veröffentlichungstag der Anmeldung: 22.03.2006
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2004/002862
(87) Internationale Veröffentlichungsnummer: WO 2004/106671

(56) Entgegenhaltungen:
- WO-A-00/71856
- WO-A1-02/38891
- DE-A- 3 231 932
- DE-C- 561 772
- JP-A- 11 280 159
- JP-U- 2 093 403
- US-A- 3 101 532

## Beschreibung

Aus DE 101 26 049 A1 ist bereits ein ringförmiger Verbindungsflansch mit einem rohrförmigen Abschnitt zum Anbringen an einem Ende eines rohrförmigen Bauteils, insbesondere für ein Turmsegment zum Aufbau eines Turmes einer Windenergieanlage bekannt, wobei es mit einem an ein Ende des Abschnitts radial anschließenden Flanschkragen mit einer axial von dem rohrförmigen Abschnitt weg orientierten Flanschfläche gebildet ist.

Zur Herstellung eines solchen ringförmigen Verbindungsflansches wird im Stand der Technik ein kreisringförmiges Element verwendet, welches in seinem Querschnitt (Profil) im Wesentlichen viereckig ist und dieses kreisringförmige Element wird dann so bearbeitet, dass der ringförmige Verbindungsflansch übrig bleibt. Bei der Bearbeitung wird in nicht geringem Maße Material aus dem kreisringförmigen Element abgetragen, um dann im Querschnitt (Profil) das gewünschte Profil des ringförmigen Verbindungsflansches einstückig zu erhalten. Mithin ist also bekannt, zur Herstellung eines Verbindungsflansches diesen aus einem metallenen Halbzeug einstückig herauszudrehen.

Aus der erwähnten Anmeldung DE 101 26 049 ist auch ein ringförmiger Verbindungsflansch bekannt, bei welchem die Außenwand des rohrförmigen Abschnitts konisch ist, insbesondere zum Anbringen an einem ebenso konischen Bauteil.

Aus der WO 02/38891 A1, der die Merkmale des Oberbegriffs von Anspruch 1 offenbart, sind Flansche zum Herstellen eines Turmes für einen Windgenerator bekannt, welcher Turm aus einer Vielzahl von zylindrischen Segmenten besteht, wobei es sich bei den Flanschen um ringförmige Verbindungsflansche handelt, die einen rohrförmigen Abschnitt und einen an ein Ende des Abschnittes radial anschließenden Flanschkragen mit einer axial von dem rohrförmigen Abschnitt weg orientierten Flanschfläche aufweisen, wobei der Flanschkragen radial nach innen an den rohrförmigen Abschnitt des Verbindungsflansches anschließt. Aus dem US 3,101,532 ist darüber hinaus ein ringförmiger Verbindungsflansch bekannt, der aus einem kreisringförmigen Element besteht, wobei das kreisringförmige Element im Querschnitt im Wesentlichen dreieckig ausgebildet ist. Aus der JP 11 280159 A und aus der JP 02-093403 U sind entsprechende ringförmige Verbindungsflansche bekannt.

Aufgabe der vorliegenden Erfindung ist es, ein Verfahren vorzuschlagen, mit welchem die Herstellung eines ringförmigen Verbindungsflansches, insbesondere eines Verbindungsflansches wie er in DE 101 26 049 beschrieben ist, zu verbessern und zu vereinfachen.

Die Aufgabe wird gelöst mit den Merkmalen von Anspruch 1 und Anspruch 2. Vorteilhafte Weiterbildungen sind in dem Unteranspruch beschrieben.

Der Erfindung liegt die Erkenntnis zugrunde, dass der Flanschkragen an seinem freien Ende nur relativ geringe Kräfte u.U. auch gar keine Kräfte zu übertragen hat. Daher ist es auch für die Festigkeit und für die Stabilität des Verbindungsflansches unschädlich, wenn die Dicke des Flanschkragens an seinem freien Ende geringer ist als in dem Bereich, wo der Flanschkragen (einstückig) in den rohrförmigen Abschnitt übergeht. Damit wird auch ermöglicht, dass als Ausgangsmaterial für die Herstellung des Verbindungsflansches nicht etwa nur ein kreisringförmiges Segment verwendet werden kann, welches in seinem Querschnitt im Wesentlichen rechteckig ausgebildet ist, sondern dieses kann auch im Wesentlichen einen dreieckförmigen Querschnitt aufweisen.

Der besondere Vorteil liegt darin, dass damit die Span- oder Dreharbeiten zur Herausarbeitung des Verbindungsflansches aus dem Halbzeug erheblich reduziert werden. Auch ist das Halbzeug dann, wenn es einen im Wesentlichen dreieckigen Querschnitt aufweist, deutlich günstiger als bisheriges Halbzeug, weil nicht ansatzweise das Halbzeug soviel Material aufweist wie bisher. Weitere Ausgestaltungen sind Gegenstand der Unteransprüche.
- Fig. 1: zeigt ein Halbzeug gemäß dem Stand der Technik;
- Fig. 2: zeigt ein Halbzeug mit einem im Wesentlichen dreieckigen Querschnitt;
- Fig. 3: zeigt ein Halbzeug mit einer Hohlkehle;
- Fig. 4 und 5: zeigen Halbzeuge einer ersten, nicht beanspruchten Ausführungsform;
- Fig. 6 und 7: zeigen Halbzeuge einer zweiten Ausführungsform;
- Fig. 8 und 9: zeigen Halbzeuge einer dritten nicht-beanspruchte Ausführungsform;
- Fig. 10 und 11: zeigen eine vierte Ausführungsform der Halbzeuge; und
- Fig. 12: zeigt ein Werkstück, aus dem zwei Flansche gewonnen werden.

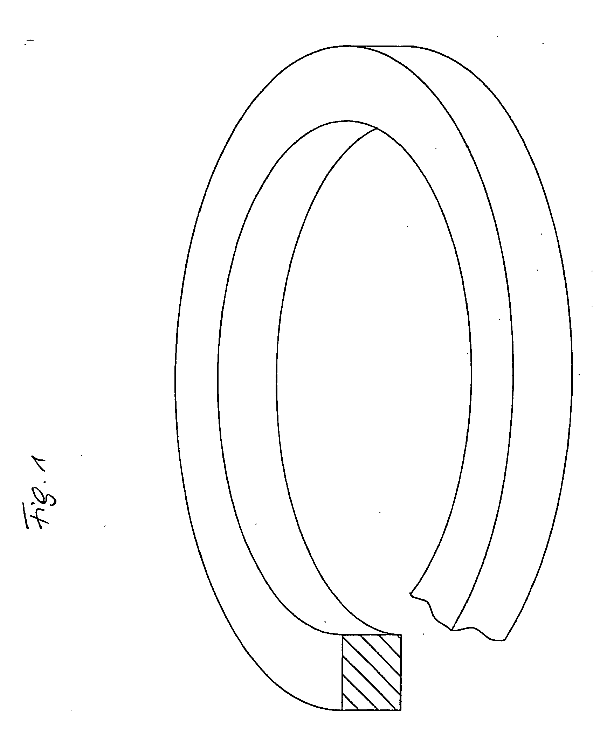

Fig. 1 zeigt ein Halbzeug, wie es im Stand der Technik verwendet wird, mit einem rechteckigen Querschnitt, aus dem der Flansch heraus gearbeitet wird.

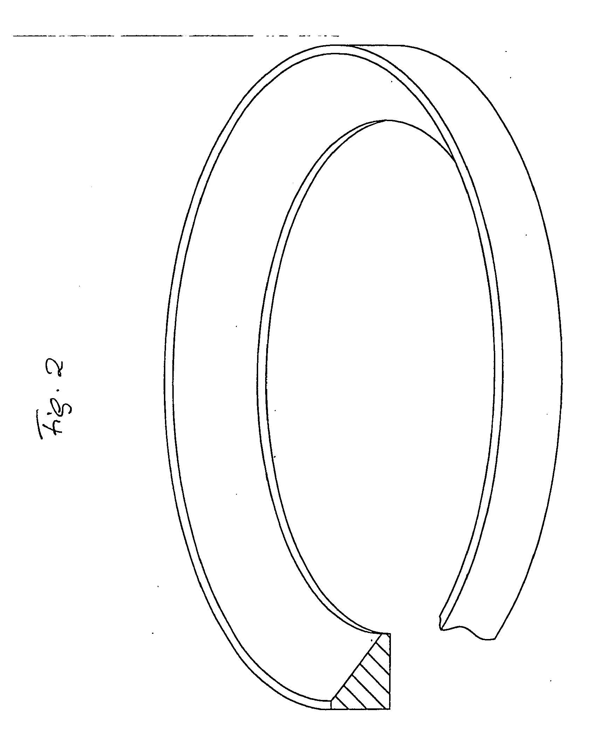

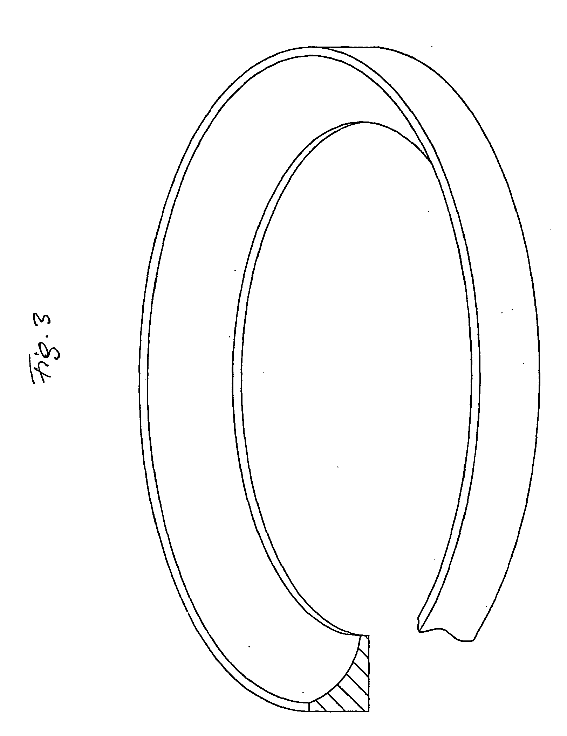

Fig. 2 zeigt ein Halbzeug mit einem im Wesentlichen dreieckigen Querschnitt, wobei die Hypotenuse des Dreiecks geradlinig ist. In Fig. 3 ist anstelle einer geradlinigen Hypotenuse ein Bogen dargestellt, so dass sich eine Hohlkehle ergibt.

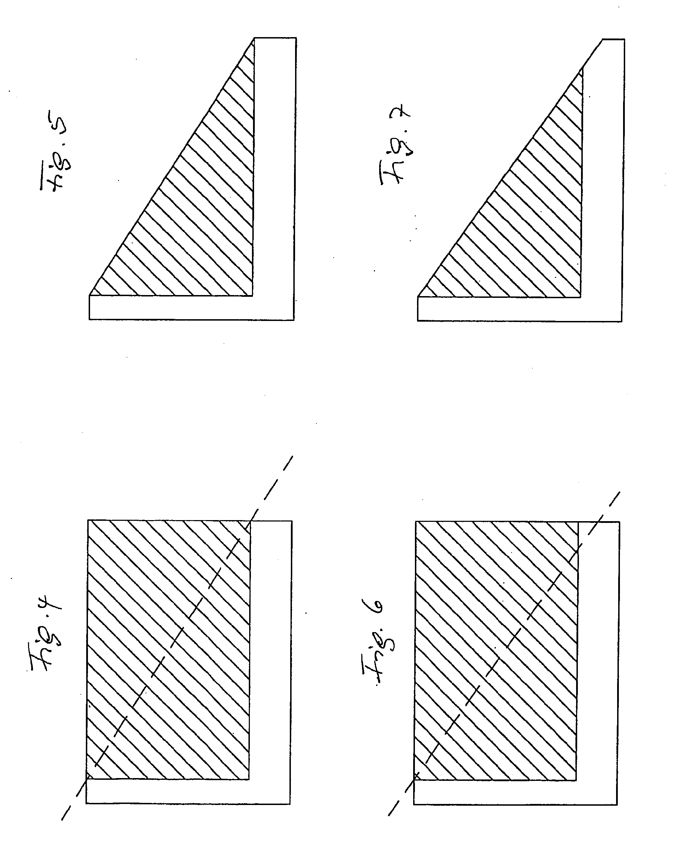

Fig. 4 zeigt eine erste nicht-beanspruchten Ausführungsform unter Berücksichtigung des Standes der Technik. Das Halbzeug ist in dieser Zeichnung rechteckig dargestellt und eine gestrichelte Linie gibt an, welcher Bereich dieses Halbzeugs erfindungsgemäß von vorn herein nicht benötigt wird.

In Fig. 5 ist ein Querschnitt durch ein entsprechendes Halbzeug gezeigt. Dabei sind in diesen beiden wie auch in den vorliegenden Figuren stets diejenigen Bereiche, die abgetragen werden müssen, schraffiert.

Die Darstellungen in den Fig. 6 und 7 sind mit denjenigen in den Fig. 4 und 5 vergleichbar. Der Unterschied liegt darin, dass in den Fig. 6 und 7 der innere Rand des Flanschringes nicht mehr rechteckig, sondern abgeschrägt ausgebildet ist.

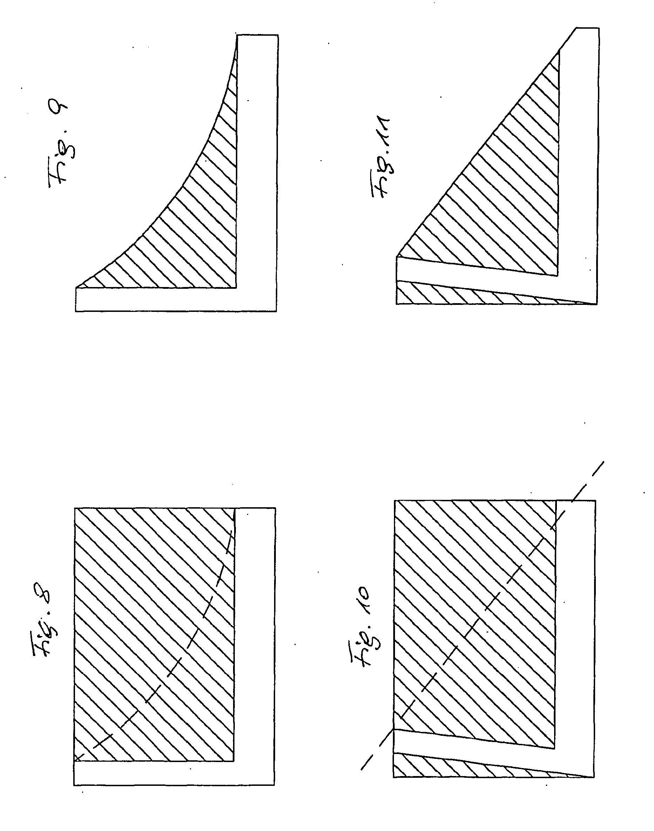

In den Fig. 8 und 9 ist ein vergleichbares Ausführungsbeispiel wie in den Fig. 4 und 5 dargestellt, allerdings mit einer Hohlkehle anstelle einer geradlinigen Begrenzung.

Die Fig. 10 und 11 zeigen ein Ausführungsbeispiel mit einem schrägen Flansch.

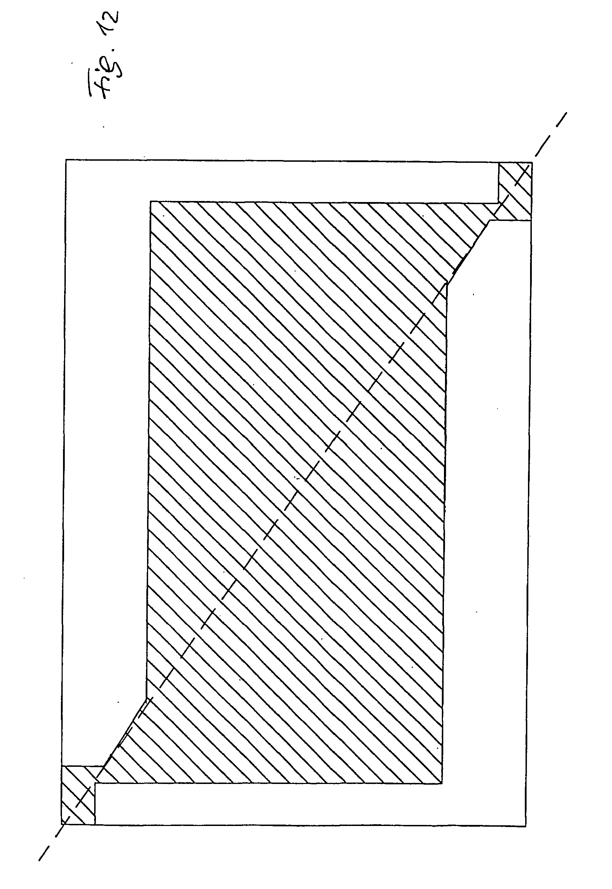

Fig. 12 zeigt schließlich wiederum ein rechtwinkliges Halbzeug und stellt dar, wie aus einem solchen Halbzeug zwei Flansche gewonnen werden können.

## Patentansprüche

1. Ringförmiger Verbindungsflansch mit einem rohrförmigen Abschnitt zum Anbringen an einem Ende eines rohrformige Bauteils, nämlich einem Turmsegment eines Turmes einer Windenergieanlage und mit einem an ein Ende des rohrförmigen Abschnitts radial anschließenden Flanschkragen mit einer axial von dem rohrförmigen Abschnitt wegorientierten Flanschfläche, wobei der Flanschkragen radial nach innen an den rohrförmigen Abschnitt des Verbindungsflansches anschließt und der Flanschkragen am freien Ende eine geringere Dicke aufweist als in dem Bereich, wo der Flanschkragen mit dem rohrförmigen Abschnitt verbunden ist, **dadurch gekennzeichnet, daß** der Flanschkragen an seinem freien Ende mit einer vorgegebenen Steigung abgeschrägt ist.

2. Verfahren zur Herstellung eines ringförmigen Verbindungsflansches nach Anspruch 1, nämlich eines L-Flansches, wobei der ringförmige Verbindungsflansch aus einem kreisringförmigen Halbzeug herausgearbeitet wird und das kreisringförmige Halbzeug im Querschnitt im Wesentlichen dreieckig ausgebildet ist.

3. Verfahren nach Anspruch 2,
**dadurch gekennzeichnet, dass** das dreieckige Profil an einer, bevorzugt zwei der drei Ecken abgestützt bzw. abgeschnitten ist.

## Claims

1. Annular connection flange having a tubular portion for mounting on an end of a tubular component, namely a tower segment of a tower of a wind power installation, and having a flange collar which radially adjoins an end of the tubular portion and which has a flange surface oriented axially away from the tubular portion, wherein the flange collar radially inwardly adjoins the tubular portion of the connection flange and the flange collar is of a smaller thickness at the free end than in the region where the flange collar is connected to the tubular portion, **characterised in that** the flange collar is chamfered at its free end with a predefined gradient.

2. Method for the production of an annular connection flange according to claim 1, namely an L-flange, wherein the annular connection flange is worked from a semi-finished product in the shape of a circular ring and the semi-finished product in the shape of a circular ring is of a substantially triangular configuration in cross-section.

3. Method according to claim 2, **characterised in that** the triangular profile is truncated' or cut off at one and preferably two of the three corners.

## Revendications

1. Bride de raccordement annulaire, comprenant une section tubulaire pour montage à une extrémité d'un composant tubulaire, à savoir un segment d'un mât d'une éolienne, et un collet de bride se raccordant radialement à une extrémité de la section tubulaire avec une face de bride axialement orientée à l'opposé de la section tubulaire, dans laquelle le collet de bride se raccorde radialement vers l'intérieur à la section tubulaire de la bride de raccordement et le collet de bride présente, à l'extrémité libre, une épaisseur plus faible que dans la zone où le collet de bride est raccordé à la section tubulaire, **caractérisée en ce que** le collet de bride est incliné à son extrémité libre avec une pente prédéfinie.

2. Procédé de fabrication d'une bride de raccordement annulaire selon la revendication 1, à savoir une bride en L, dans lequel la bride de raccordement annulaire est façonnée dans un produit semi-fini en forme de couronne circulaire et le produit semi-fini en forme de couronne circulaire présente une forme sensiblement triangulaire en section transversale.

3. Procédé selon la revendication 2,
**caractérisé en ce que** le profilé triangulaire est soutenu ou découpé à un, de préférence deux des trois coins.
